Europäisches Patentamt

(19) European Patent Office

Office européen des brevets

(11) Publication number: **0 309 446 B1**

(12) # EUROPEAN PATENT SPECIFICATION

(45) Date of publication of patent specification :
11.09.91 Bulletin 91/37

(51) Int. Cl.⁵ : **B60R 9/04**

(21) Application number: 86903395.1

(22) Date of filing : 03.06.86

(86) International application number :
PCT/FI86/00060

(87) International publication number :
WO 87/07568 17.12.87 Gazette 87/28

(54) **ROOF RACK FOR AUTOMOBILES.**

(43) Date of publication of application :
05.04.89 Bulletin 89/14

(45) Publication of the grant of the patent :
11.09.91 Bulletin 91/37

(84) Designated Contracting States :
AT BE CH DE FR GB IT LI NL SE

(56) References cited :
EP-A- 0 014 185
DE-A- 3 102 863
DE-A- 3 234 597
GB-A- 2 073 686
US-A- 3 282 455

(73) Proprietor : PELTOLAN METALLI OY
Anjalankoski Tammenmäentie 4
SF-46940 Anjala (FI)

(72) Inventor : PELTOLA, Jyrki
Anjalankoski
Itäasemantie 14 SF-46800 Myllykoski (FI)

(74) Representative : Neidl-Stippler, Cornelia, Dr.
Rauchstrasse 2
W-8000 München 80 (DE)

## Description

The present invention relates to a car roof rack comprising a support frame and a load carrier which is movable on top of the support frame, the said support frame consisting of two upwardly open profiles which can be attached, by means of fasteners, to the drip moldings or the like provided in the car roof, and the said load carrier consisting of a framework having downwardly open side profiles which are fitted to move along the profiles of the support frame, resting on rollers, and are pivotally attached to the support frame so that the load carrier can be lowered down onto the side of the car for loading or unloading. The use of this kind of a car roof rack helps in loading fairly heavy and large objects onto the roof rack. The objects to be loaded can be for instance a sailboard, a bicycle, a canoe, etc.

In the prior art there are employed roof racks operated according to the same basic principle, i.e. roof racks where the load-carrying part of the rack can be pulled to the side or to the back of the car in order to ease the loading.

The EP patent application EP-A-0101054 introduces a roof rack particularly designed for a travelling vehicle, which roof rack can be pulled sideways from the car roof and inclined down to the side of the car. According to the said specification, the basic elements of the roof rack are two crossbars attached transversally to the drop moldings of the car roof, in principle by conventional means. In connection with the said crossbars, a track has been arranged for another pair of crossbars, which are located on top of the first pair so that they can be pulled aside by aid of the wheels placed at the end of the first crossbars. The latter crossbars are connected, by means of beams, arranged in the longitudinal direction of the car, to form a framework proper for carrying the load. The upper crossbars are fastened to the lower crossbars by means of a specific locking means, which must be secured separately by hand. Similarly the whole movable rack must be pushed back onto the roof with the aid of manual power only.

The published DE application DE-A-3,107,196 introduces an apparatus where in connection with the basic framework, corresponding to the one introduced in the said EP application, there is arranged a load-carrying beam located in connection with the basic framework but higher, resting on supports. The supports on one side are provided with locking means, and the supports on the other side are provided at the bottom with rollers, which move along the upwardly opening C-beams of the basic framework. When the load beams are pulled outwards, the innermost of the two supports on the opposite side touches the end stopper of the beam of the basic framework, and simultaneously the rollers of the farside support meet the opening made on the top surface of the C-beams, so that the rollers can rise up from inside the beam through the said opening, and thus allow the load beam to be turned down to the side. In this as well as in the previous specification, the load beams are connected, by means of beams arranged in the longitudinal direction of the vehicle, to form a framework construction. In this case the lifting of the loaded roof rack must be performed manually throughout, and so that the rollers of the innermost support all the time rest against the stoppers of the C-beam of the basic framework. The described roof rack is troublesome from the user's point of view, which becomes apparent after a short-time observation of the facts.

The published US specification US-A-4,081,095 introduces a roof rack where in connection with the basic framework, alike the ones in the previous examples, there is arranged a load frame slidable on rollers. In this case the basic framework is formed of sidewardly open C-beams, inside which the rollers of the load frame roll. The last of the load frame rollers is larger than the rest in diameter, so that the slipping of the frame out of place is prevented by means of a stop, below which the rollers, except for the biggest one, are fit to slide. At the same time the last roller serves as a kind of hinge which enables the turning down of the load frame. Also in this embodiment, the load frame must be lifted completely manually first to the right direction with respect to the basic framework, and thereafter pushed back to place.

All of the above described roof racks have the following features in common. First of all, shifting and moving is totally dependent on the personal strength of the user, and particularly the placing of a loaded rack back onto the roof requires a lot of muscular power. Secondly, a good support during the inclination sideways is almost completely missing. Thirdly, in addition to muscular power, the roof racks according to the US an DE specifications in particular also require accuracy when shifting the loaded rack back onto the roof, wherefore the handling of a heavy load is nearly impossible.

In order to bring forth improvements to the problematic features enlisted above, the roof rack of the present invention has been developed, and it is characterized in that in each profile of the support frame there is fitted a carriage which is advantageously formed of a downwardly open U-profile, and the carriage is provided with two rollers or pairs of rollers, on which it is free to slide along the support frame, and that the profiles of the load carrier are pivotally attached to the one end of the carriage, advantageously onto the axis of the first pair of rollers of the carriage, and supported, by means of support bars, against the opposite end of the carriage, the said support bars being advantageously journalled onto the axis of the second pair of rollers, which can move along an aperture, provided in the carriage, in the longitudinal direction thereof, whenever the load carrier is lowered down onto the side of the car or lifted up therefrom.

In the following the roof rack of the invention is described in detail with reference to the appended drawings, where

figure 1 is an overall illustration of the roof rack of the invention ;

figure 2 illustrates the roof rack of the invention in more detail in an inclined position ;

figure 3 is an end view illustration of the same roof rack ;

figure 4 is an illustration of one preferred embodiment of the support bar ;

figure 5 illustrates the operation of the locking piece ; and

figure 6 illustrates the locking means of the load carrier.

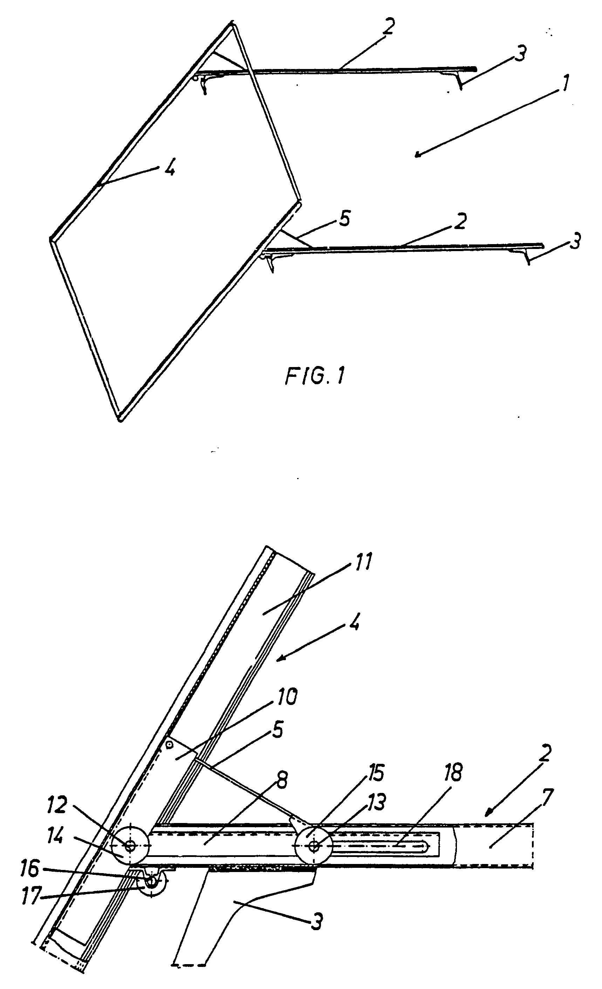

According to figure 1, the roof rack 1 is in principle composed of the support frame, i.e. the crossbars 2 known in the prior art, which crossbars are fastened to the drip moldings of the car or the like with regular fasteners 3. In connection with the crossbars 2, there is arranged a load carrier 4, which can be shifted down to the side of the car, and which in the case of figure 1 forms a rectangular bar framework. As a distinction, in comparison with the prior art solutions, the drawing shows the support bar 5, which is located in between the crossbars 2 and the load carrier 4.

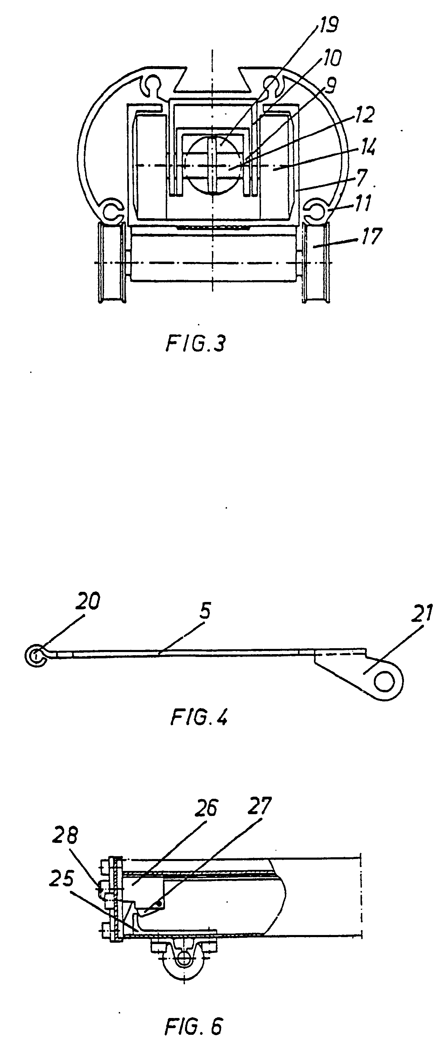

Figure 2 illustrates in more detail the cooperation of the support frame 2, the load carrier 4 and the crossbar 7, as well as the function of the support bar 5 in connection with these. Simultaneously we also refer to figure 3, which shows an end-view of a situation where the load carrier 4 is located on top of the support frame, in transportable position. Thus the support frame 2 is formed of two upwardly open C-profiles 7, inside which is located the carriage 8, which is formed of a downwardly open U-profile 9 or the like, and of a support profile 10, which is rigidly fastened to the cover profile 11 of the load carrier. On the side of the carriage 8, on the axes 12 and 13, there are journalled the rollers or pairs of rollers 14 and 15, supported by which the carriage 8, and therealong the load carrier 4, slides sideways. The axis 12 of the carriage 8 also serves as the journalling point of the support profile 10 while the load carrier is being inclined. Moreover, on the bottom surface of the profile of the crossbar 2, there is fastened, in connection with the axis 16, a roller or a pair of rollers 17, where'along the cover profile 11 slides, and supported by which it is also turned. Thus, when the load carrier is desired to be shifted to the side, the locking is released and the load carrier 4 is pulled sideways. The part of the cover profile 11 that is located on the side of the puller, slides, resting on the rollers 17, and the rest of the cover profile 11 is supported against the bottom of the C-profile 7 of the crossbar 2 by means of the rollers 14 and 15 of the carriage 8. When the front rollers 14 reach the end of the profile 7 of the crossbar 2, the carriage 8 is stopped at the stopper 25. At this stage the elongate aperture 18, located in the housing 9 of the carriage 8, where the axis 13 can freely move along the longitudinal direction of the carriage, is made use of. The axis 13 is journalled to one end of the support bar 5. The other end of the bar 5 is in turn journalled to the support profile 10. Consequently, while pressing the outer edge of the load carrier 4 downwards, the inner edge rises up, and the axis 13 together with the rollers 15 is shifted, moved by the support bar 5, towards the axis 12. Thus, by adjusting or changing the length of the aperture 18 in the direction of the axis 12, the inclination of the load carrier 4 can be regulated.

In figure 2 there is also shown the fastener 3, by means of which the roof rack is fastened to the drop molding of an ordinary car roof. Figure 3 also includes a sketchy illustration of the gas cylinder 19, which is coupled inside the profile 9 of the carriage 8, in between the axis 13 and the axis 12 or some corresponding back stop.

Figure 4 illustrates the crossbar 5 seen from the side. The crossbar 5 comprises the loop head 20, which is journalled to the support profile 10, and of the fork head 21, which is journalled onto the axis 13. An adjusting member can also be arranged in connection with the support bar in order to regulate the length thereof, by means of which adjusting member the angle of inclination of the load carrier could be adjusted as an alternative to the adjusting of the length of the aperture 18.

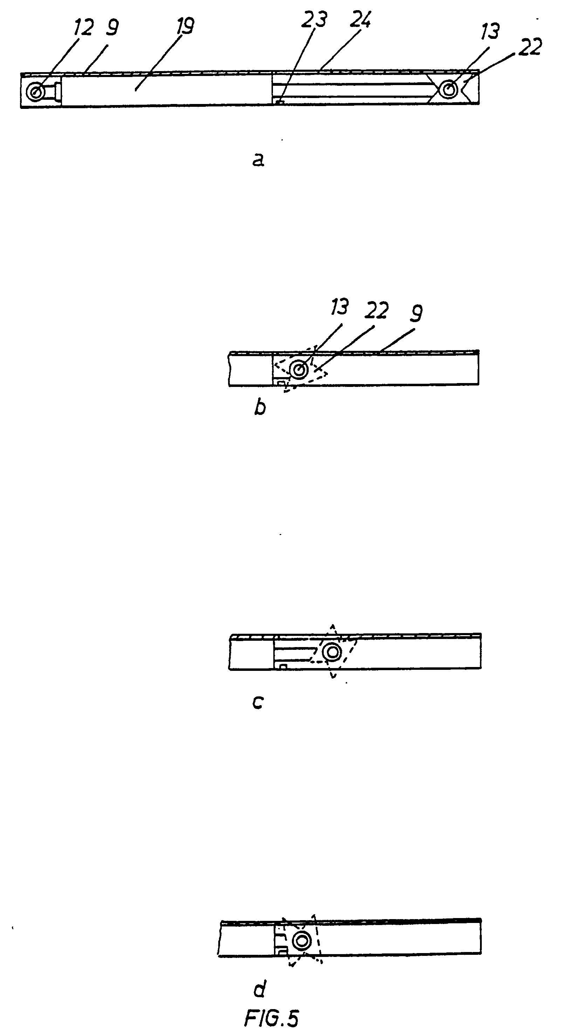

The series of drawings 5a-5d introduces the locking means arranged at the end of the gas cylinder 19 which is located nearer to the axis 13, which locking means eases the operation of the device. Figure 5a shows a situation where the roof rack is in its transport position, the load carrier 4 placed on top of the support frame 2, and the gas cylinder 19 is extended to its full length in rest position, the locking piece 22 ready to slide along the profile 9 of the carriage 8. Figure 5b shows a situation where the support bar 5 has pressed the piston rod of the gas cylinder 19 in, and likewise it has pressed the locking piece 22, which is journalled onto the axis 13, inside the profile 9 to get it into contact with the studs 23, which studs turn the locking piece 22 into the position shown in figure 5c, where the locking piece 22 is locked against the edge of the opening 24 located on the top surface of the profile 9, so that the gas cylinder 19 cannot push the axis 13 any further. Thus the load carrier 4 is locked in its inclined position for the duration of the loading operation. According to figure 5d, when the outer edge of the load carrier 4 is slightly pressed, the piston rod is slightly pushed to inside the gas cylinder 19, and the locking piece 22 is pressed against the studs 23, consequently turning so that the gas cylinder 19 is free to return to its initial position and also to return the load carrier 4 to be parallel with the support frame 2. Consequently the final situation is as in figure 5a.

The load carrier 4 is used so that it is first pressed to its low position, wherefrom it slightly rises and is then locked in place for the duration of the loading operation. When the load carrier 4 is desired to be raised, it is slightly pressed down, so that the locking effect goes off and the locking piece 22 allows the load carrier 4 to be lifted, aided by the gas cylinder according to how it is adjusted. While lowering the loaded load carrier 4 down, the gas spring respectively slows down the motion. The dimensions of the gas cylinder are defined so that a certain amount of physical power is needed for pressing the load carrier down, which power is again available for help when the load carrier must be lifted back up.

Figure 6 illustrates the stopper 25 of the carriage 8, which stopper is also used for locking the load carrier 4 into place in order to prevent it from shifting sideways. The lock 26 is formed of the bolt 27, which is pressed by a spring against the stopper 25, and of the pin 28 at the end of the cover profile 11, by pressing which pin the bolt 27 is turned up so that the cover profile 11 is free to slide sideways.

Furthermore it is pointed out that the load carrier 4 does not turn uncontrollably down before the carriage 8 has stopped at the stopper 25, due to the respective positions of the rollers 17 and 14. Moreover, the degree of the inclination of the load carrier can, if necessary, be adjusted by arranging length regulation in the support bar 5, as was described above.

According to what has been explained above, it is apparent that the solution introduced in the present invention eliminates the drawbacks prevailing in the prior art devices, i.e. the heaviness of the lifting stage and the need for accuracy in positioning the load carrier, which in the solution of the present invention is taken care of by means of the carriage 8. However, it is pointed out that the above described suggestion is only one preferred embodiment of the invention, and its purpose is not to limit the invention any further from the appended patent claims, where the scope and range of the invention are manifested. Thus it is possible to make even remarkable modifications in the preferred embodiment described above, for instance by assuming the principle that the support frame can be composed of moren than only two crossbars, or that the load carrier can be pulled, depending on the type of car in question, down to the front or to the back of the car.

## Claims

1. A roof rack for automobiles, consisting of a support frame (2) and of a load carrier (4) to be shiftable thereon, the said support frame (2) comprising two upwardly open profiles (7) which are attachable to the drop moldings or the like on the car roof by aid of fasteners (3), and the said load carrier (4) forming a framework provided with cover profiles (11) which are downwardly open and fitted into the profiles of the support frame, to move on rollers therealong, and journalled to the support frame (2) so that the load carrier can be lowered down to the side of the car for loading or unloading, **characterized** in that in each profile (7) of the support frame (2) there is fitted a carriage (8), which is composed of an advantageously downwardly open U-profile, and that the carriage is provided with two rollers or pairs of rollers (14, 15), on which it can freely move along the support frame, and that each cover profile (11) of the load carrier (4) are journalled to one end of the carriage (8), advantageously on the axis (12) of the first pair of rollers (14) of the carriage, and supported by a support bar (5) against the opposite end of the carriage, the said support bars (5) being advantageously journalled onto the axis (13) of the second pair of rollers (15), which axis (13) is free to move in an aperture (18) provided in the carriage (8), in the longitudinal direction thereof, even when the load carrier (4) is being lowered down onto the side of the car or lifted up therefrom.

2. The roof rack of claim 1, **characterized** in that on the axis (13) of the second pair of rollers (15) there is journalled a gas cylinder (19), one end whereof is attached to the housing profile (9) of the carriage (8) or on the axis (12) of the first pair of rollers (14).

3. The roof rack of claim 1 and 2, **characterized** in that on the axis (13) of the second pair of rollers (15) there is journalled a locking piece (22), which functions in co-operation with the studs (23) of the housing profile (9) and the opening provided on the top surface of the housing profile (9).

4. The roof rack of claim 1, 2 or 3, **characterized** in that rollers (17) are arranged on the bottom surface of the bar (7) of the support frame (2) so that the profile (11) of the load carrier (4) is turned, resting on the said rollers (17), while the load carrier (4) is being inclined.

5. The roof rack of any of the preceding claims, **characterized** in that the length of the support bar (5) and/or of the aperture (18) is adjustable.

## Patentansprüche

1. Dachgepäckträger für Automobile, bestehend aus einem Trägerrahmen (2) und aus einem Lastträger (4), der auf diesem verschiebbar ist, wobei der Trägerrahmen (4) zwei nach oben offene Profile (7) aufweist, die an den Dachrinnen oder dergleichen auf dem Automobildach mittels Befestigungseinrichtungen (3) anbringbar sind, wobei der Lastträger (4) ein Fachwerk bildet, das mit Deckprofilen (11) versehen ist, die nach unten offen sind und auf die Profile des Trägerrahmens so eingepaßt sind, daß sie sich auf diesem auf Rollen bewegen, die drehbar am Trägerrahmen (2) so angebracht sind, daß der Lastträger auf der Seite des Fahrzeuges herabgelassen werden kann, um be- oder entladen zu werden, dadurch gekennzeichnet, daß in jedes Profil (7) des Trägerrahmens (2) ein Wagen (8) eingepaßt ist, der bevorzugt aus einem nach unten offenen U-Profil zusammengesetzt ist, wobei der Wagen mit zwei Rollen oder Rollenpaaren (14, 15) versehen ist, auf denen er sich frei entlang dem Trägerrahmen bewegen kann, und daß jedes der Deckprofile (11) des Lastträgers (4) an einem Ende des Wagens (8) drehbar angebracht ist, bevorzugt auf der Achse (12) des ersten Rollenpaares (14) des Wagens und durch eine Stützstange (5) gegen das entgegengesetzte Ende des Wagens abgestützt, wobei die Stützstangen (5) bevorzugt auf der Achse (13) des zweiten Rollenpaares (15) drehbar angeordnet sind, wobei diese Achse (13) sich frei in einer Öffnung (18), die im Wagen (8) in dessen Längsrichtung vorgesehen ist, bewegen kann, auch dann, wenn der Lastträger (4) auf der Seite des Wagens herabgelassen oder von diesem angehoben ist

2. Gepäckträger nach Anspruch 1, dadurch gekennzeichnet, daß an der Achse (13) des zweiten Rollenpaares (15) ein Gaszylinder (19) drehbar angeordnet ist, dessen eines Ende am Gehäuseprofil (9) des Wagens (8) oder auf der Achse (12) des ersten Rollenpaares (14) befestigt ist.

3. Gepäckträger gemäß Anspruch 1 und 2, dadurch gekennzeichnet, daß auf der Achse (13) des zweiten Rollenpaares (15) ein Rastteil (22) angeordnet ist, das mit den Fortsätzen (23) des Gehäuseprofils (9) und der Öffnung auf der Oberfläche der Gehäuseprofile (9) zusammenwirkt.

4. Gepäckträger nach Anspruch 1, 2 oder 3, dadurch gekennzeichnet, daß auf der Bodenfläche der Stange (7) des Trägerrahmens (2) Rollen (17) so angeordnet sind, so daß das Profil (11) des Lastträgers (4), das auf den Rollen (17) ruht, gedreht wird, wenn der Lastträger (4) geneigt wird.

5. Gepäckträger nach irgendeinem der vorangehenden Ansprüche, dadurch gekennzeichnet, daß die Länge der Trägerstange (5) und/oder der Öffnung (18) einstellbar ist.

## Revendications

1. Porte-bagages pour automobiles constitué d'un châssis de support (2) et d'un support de charge (4) pouvant glisser sur celui-ci, ledit châssis de support (2) comprenant deux profilés (7) ouverts vers le haut qui peuvent être fixés aux gouttières ou éléments analogue du toit de la voiture au moyen de dispositifs de fixation (3) et ledit support de charge (4) constituant un cadre comportant des profilés de recouvrement (11) qui sont ouverts vers le bas et qui viennent s'adapter dans les profilés du cadre de support afin de se déplacer sur des rouleaux le long de celui-ci et montés à pivot sur le cadre de support (2) de façon à ce que le support de charge puisse être abaissé sur le côté de la voiture pour le chargement ou le déchargement, caractérisé en ce que, dans chaque profilé (7) du cadre de support (2), est ajusté un chariot (8) constitué d'un profilé en "U" ouvert avantageusement vers le bas, que le chariot est équipé de deux rouleaux ou paires de rouleaux (14, 15) sur lesquels il peut se déplacer librement le long du cadre de support et que chaque profilé de recouvrement (11) du support de charge (4) est monté à pivot sur une extrémité du chariot (8), avantageusement sur l'axe (12) de la première paire de rouleaux (14) du chariot et est supporté par une barre de support (5) à l'extrémité opposée du chariot, lesdites barres de support (5) étant montées avantageusement à pivot sur l'axe (13) de la deuxième paire de rouleaux (15), ledit axe (13) pouvant se déplacer librement dans un orifice (18) pratiqué dans le chariot (8) dans la direction longitudinale de celui-ci, même lorsque le support de charge (4) est abaissé sur le côté de la voiture ou soulevé depuis cet endroit.

2. Porte-bagages selon la revendication 1, caractérisé en ce que, sur l'axe (13) de la deuxième paire de rouleaux (15), est montée à pivot une bonbonne de gaz (19) dont une extrémité est fixée au profilé de logement (9) du chariot (8) ou sur l'axe (12) de la première paire de rouleaux (14).

3. Porte-bagages selon les revendications 1 et 2, caractérisé en ce que, sur l'axe (13) de la deuxième paire de rouleaux (15) est montée à pivot une pièce de blocage (22) qui fonctionne en coopération avec les goujons (23) du profilé de logement (9) et l'ouverture pratiquée sur la surface supérieure du profilé de logement (9).

4. Porte-bagages selon la revendication 1, 2 ou 3, caractérisé en ce que les rouleaux (17) sont disposés sur la surface inférieure de la barre (7) du cadre de support (2) si bien que le profilé (11) du support de charge (4) est retourné de manière à reposer sur lesdits rouleaux (17) lorsque ledit support de charge (4) est incliné.

5. Porte-bagages selon l'une quelconque des revendications précédentes, caractérisé en ce que la longueur de la barre de support (5) et/ou de l'orifice (18) peut être réglée.

FIG.1

FIG.2

FIG.3

FIG.4

FIG. 6

a

b

c

d

FIG.5